# EUROPEAN PATENT SPECIFICATION

(11) **EP 2 946 985 B1**
(45) Date of publication and mention of the grant of the patent: **11.04.2018**
(21) Application number: 13871464.7
(22) Date of filing: 26.12.2013
(51) Int. Cl.: B62B 9/12, B62B 7/06

(54) **BABY STROLLER**
KINDERWAGEN
POUSSETTE DE BÉBÉ

(30) Priority: 15.01.2013 CN 201320020279 U; 16.01.2013 CN 201320023397 U
(43) Date of publication of application: 25.11.2015
(73) Proprietor: Goodbaby Child Products Co., Ltd., Kunshan, Jiangsu 215331 (CN)
(72) Inventor: WU, Haijun, Kunshan Jiangsu 215331 (CN)
(74) Representative: De Vries & Metman
(86) International application number: PCT/CN2013/090537
(87) International publication number: WO 2014/110963

(56) References cited:
- EP-A2- 0 663 332
- WO-A1-2005/054031
- CN-A- 101 605 688
- CN-A- 102 343 929
- CN-U- 203 111 255
- CN-U- 203 111 283
- US-A1- 2006 255 565
- US-A1- 2008 061 533

## Description

### Field of the Invention

The utility model relates to a baby carriage.

### Description of the Related Art

A baby carriage of the prior art generally comprises a frame having an unfolded position and a folded position, a front wheel assembly arranged at bottom and front of the frame, a rear wheel assembly arranged at bottom and back of the frame, a frame locking mechanism for locking the frame when it is in the unfolded position, and a human body accommodation device provided on the frame. Currently, there exist a wide variety of frames in which the number of rods, the connections and connection locations between rods are different from each other, thus the usage and functionalities of the frames are very different from each other. **Document** EP0663332A2 **is related to a push chair, which has two side assemblies secured** spaced apart from and parallel to each other, each side assembly comprising a side coupling unit to which a front leg and a rear leg are each pivotally attached. Each coupling unit has a main pawl arranged to engage with a detent to secure the front and rear legs in a predetermined relative orientation. A respective struts has one and pivotally connected to a respective side coupling unit and its other end connected to a central pilot joint arranged to allow the two struts to pivot relative to one another between a first relative orientation in which they are in line with or at an obtuse angle to one another so as to resist movement of the coupling units towards one another and a second relative orientation in which they lie side by side. Each strut has a cam arranged to cause disengagement of the main pawl so as to initiate relative pivotal movement between the corresponding front and rear legs when the struts move away from their first relative orientation.

### Summary of the Invention

A technical problem to be solved by the invention is to provide a baby carriage.

For solving the above technical problem, the invention utilizes the following technical solution.

A baby carriage comprises a folding frame, a seat disposed on the frame, a front wheel assembly, a rear wheel assembly and a locking mechanism for locking the frame when it is in an unfolded state. The frame comprises a push rod bracket and a folding base bracket, the push rod bracket comprises a push rod seat rotatably connected with the base bracket by a first shaft, and a push rod only slidably disposed on the push rod seat. The locking mechanism comprises a bracket locking mechanism for locking the base bracket, a reversing locking mechanism disposed on the push rod bracket and/or base bracket for relatively locking the push rod bracket with the base for controlling the unlocking of the front wheel directional mechanism and a rear wheel control mechanism for controlling the unlocking of the rear wheel directional mechanism. The front wheel control mechanism comprises a front traction rope, the rear wheel control mechanism comprises a rear traction rope, and a push rod positioning mechanism is disposed between the base bracket and the push rod bracket.

The push rod bracket has a first working position, a second working position and a third working position, in the first working position, the push rod inclines backwards from down to up, and the front traction rope overcomes an elastic force of the front wheel elastic member to be dragged, the front wheel directional mechanism is in the unlocked position, and the rear wheel directional mechanism is in the locked position. In the second working position, the push rod inclines forwards from down to up, the front wheel directional mechanism is in the locked position, the rear traction rope overcomes an elastic force of the rear wheel elastic member to be dragged, and the rear wheel directional mechanism is in the unlocked position. In the third position, the push rod substantially is kept in the vertical direction, the front traction rope overcomes the elastic force of the front wheel elastic member to be dragged, the front wheel directional mechanism is in the unlocked position, the rear traction rope overcomes the elastic force of the rear wheel elastic member to be dragged, and the rear wheel directional mechanism is in the unlocked position. The terms "front" and "rear" herein and throughout the utility models are defined according to usual habits of a user, and cannot be understood as general technical terms. The term "front" means a direction to which a baby in the carriage faces, and the term "rear" means a direction to which a baby in the carriage backs.

In a preferred embodiment, the front wheel control mechanism also comprises a front sliding block slidably disposed on the base bracket and in front of the first shaft, and a front reversing member fixedly or rotatably disposed on the front bracket, the front traction rope winds over the front reversing member such that its upper portion is connected with the front sliding block, a first accommodating groove is opened on the push rod seat, one side wall of the first accommodating groove is a first slope , when the push rod bracket rotates around the first shaft into the second working position, the front sliding block is inserted into the first accommodating groove and the front sliding block draws close to the first shaft, when the push rod bracket rotates around the first shaft into the third working position or the first working position, the front sliding block is detached from the first accommodating groove, and the front sliding block is far away from the first shaft. More preferably, the front sliding block is slidably disposed on the front bracket.

In a preferable embodiment, the rear wheel control mechanism also comprises a rear sliding block slidably disposed on the base bracket and in back of the first shaft, and a rear reversing member fixedly or rotatably disposed on the rear bracket, the rear traction rope winds over the rear reversing member such that its upper portion is connected with the rear sliding block, a second accommodating groove is opened on the push rod seat, one side wall of the second accommodating groove is a second slope, when the push rod bracket rotates around the first shaft into the second working position or the third position, the rear sliding block is detached form the second accommodating groove and the rear sliding block is far away from the first shaft, when the push rod bracket rotates around the first shaft into the first working position, the rear sliding block is inserted into the second accommodating groove, and the rear sliding block draws close to the first shaft.

More preferably, the rear sliding block is slidably disposed on the rear bracket.

In a specific embodiment, the front wheel directional mechanism comprises a front wheel directional sliding block slidably or rotatably disposed on the front bracket, the front wheel elastic member is disposed between the front wheel directional sliding block and the front bracket, and a lower portion of the front traction rope is connected with the front wheel directional sliding block, and/or the rear wheel directional mechanism comprises a rear wheel directional sliding block slidably or rotatably disposed on the rear bracket, the rear wheel elastic member is disposed between the rear wheel directional sliding block and the rear bracket, and a lower portion of the rear traction rope is connected with the rear wheel directional sliding block.

In some further preferable embodiments, the base also comprises:
a first base connecting rod with a front portion being rotatably connected with the front bracket by a second shaft; and
a second base connecting rod with a rear portion being rotatably connected with rear bracket by a third shaft, a rear portion of the first base connecting rod is rotatably connected with a front portion of the second base connecting rod around a fourth shaft, The bracket locking mechanism is disposed between the first base connecting rod and the second base connecting rod.

In some another embodiments, the bracket locking mechanism comprises an unlocking button for unlocking, in the course of push rod sliding down relative to the push rod seat, the push rod is able to press the unlocking button to unlock the bracket locking mechanism.

In some another embodiments, the reversing locking mechanism can lock the push rod bracket in the first and second working positions relative to the base bracket.

In some further embodiments, the push rod seat and the upper portion of the front bracket are rotatably connected with the upper portion of the rear bracket around the first shaft.

More preferably, the reversing locking mechanism comprises a locking element with a locking tongue and rotatably connected on the push rod seat around a fifth shaft, and a first locking groove and second locking groove opened on an upper portion of the front bracket and/or an upper portion of the rear bracket. The push rod bracket has a first working position and a second working position, when the push rod bracket is in the first working position, the locking tongue is inserted into the first locking groove, when the push rod bracket is in the second working position, the locking tongue is inserted into the second locking groove, the fifth shaft is deviated from the first shaft.

In some embodiments, the telescoping locking mechanism can lock the push in at least two positions relative to the push rod seat, in the first position the push rod is substantially located at an upper portion of the push rod seat, and in the second position the push rod is substantially located at a lower portion of the push rod seat.

In some embodiments, the telescoping locking mechanism comprises a first positioning groove opened on the push rod seat, a second positioning groove opened on the push rod seat and below the first positioning groove, a first positioning block rotatably or slidably disposed on a lower portion of the push rod and a second positioning block rotatably or slidably disposed on an upper portion of the push rod, when the frame is in the unfolded position, the first positioning block is inserted into the first positioning groove, when the frame is in the folded position, the second positioning block is inserted into the second positioning groove, a control mechanism is provided on the push rod for controlling the action of the first positioning block and the second positioning block. In some further embodiments, the second positioning groove at a lower side thereof has a first inclined plane which is able to contact against the first positioning block such that the first positioning block (81)exits downwards the second positioning groove, the first positioning block at an upper portion thereof has a second inclined plane which is able to contact against an upper portion of the opening portion of the second positioning groove such that the first positioning block exits upwards the second positioning groove, and the second positioning block at a lower portion thereof has a third inclined plane which is able to contact against a lower portion of the opening portion of the first positioning groove such that the second positioning block exits downwards the first positioning groove.

In some embodiments, the front wheel assembly is arranged at the bottom and front portion of the base bracket and the rear wheel assembly is arranged at the bottom and rear portion of the base bracket.

The directional expressions such as "front", "rear", "up" and "down" as described above are defined when the frame is in the unfolded position, and the position of the front wheel assembly means front, and the position of the rear wheel assembly means rear.

The scope of the utility models is not limited to the technical schemes combined particularly by the abovementioned technical features, other technical schemes combined discretionarily by the above-mentioned technical features or equivalent features should also be covered in the present utility models, such as the technical schemes formed by exchanging the aforementioned features with the technical features having the similar functions, including but not limited to, disclosed in the utility models.

Due to the above technical solution, the present utility models has the following advantages as compared with the prior art: the base bracket is configured as a link mechanism to achieve single folding. In the course of folding, the push rod can slide downstairs relative to the push rod seat, thereby reducing the height and volume of the carriage after folding.

### Brief Description of the Drawings

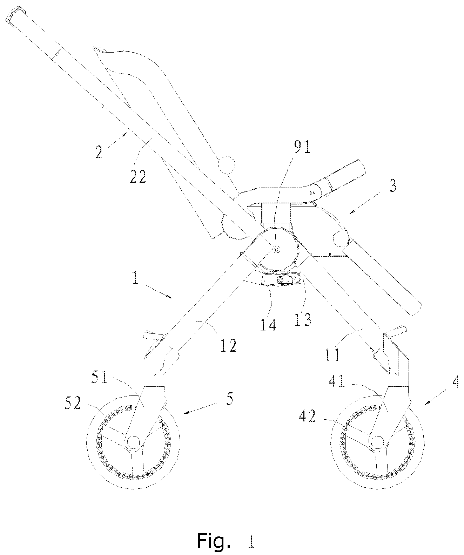

Fig.1 is a side view of a frame of a baby carriage in an unfolded position, wherein the push rod bracket is in the first working position;

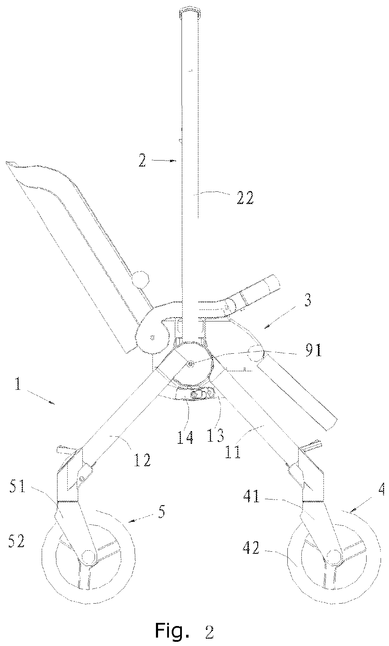

Fig.2 is a side view of a frame of a baby carriage in an unfolded position, wherein the push rod bracket is in the third working position;
Fig.3 is a side view of a frame of a baby carriage in an unfolded position, wherein the push rod bracket is in the second working position;

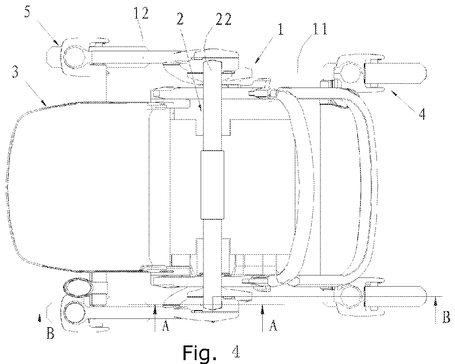

Fig.4 is a top view of the frame of fig. 2;

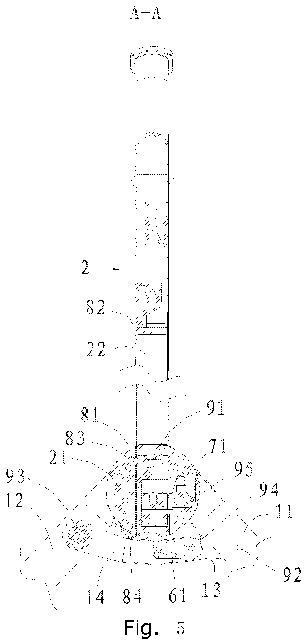

Fig. 5 is an enlarged section view of the portion A-A shown in fig. 4;

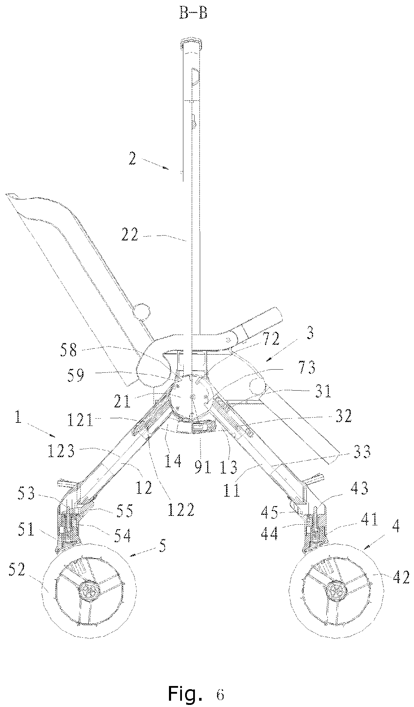

Fig. 6 is an enlarged section view of the portion B-B shown in fig. 4;

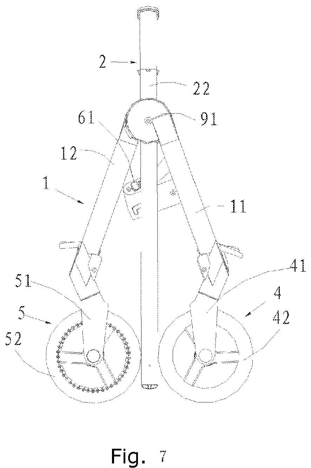

Fig.7 is a side view of the frame in a folded position;

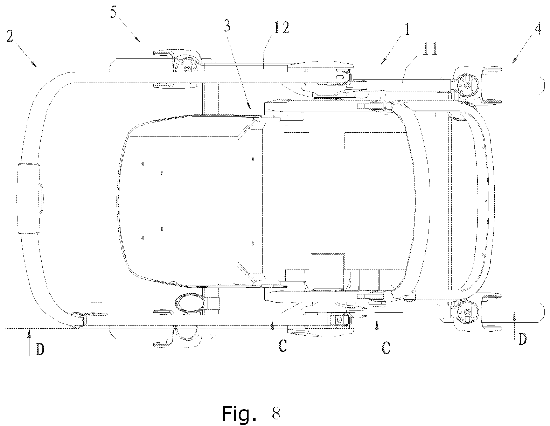

Fig.8 is a top view of the frame of the fig.1;

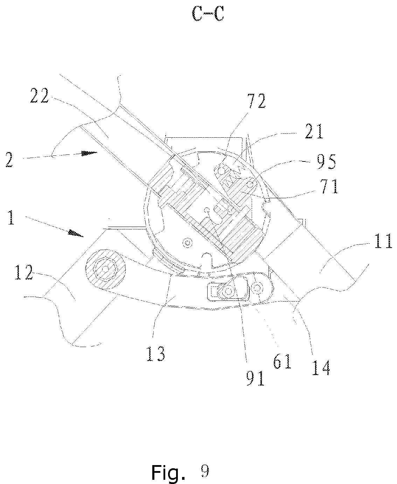

Fig.9 is an enlarged section view of the portion C-C shown in fig. 8;

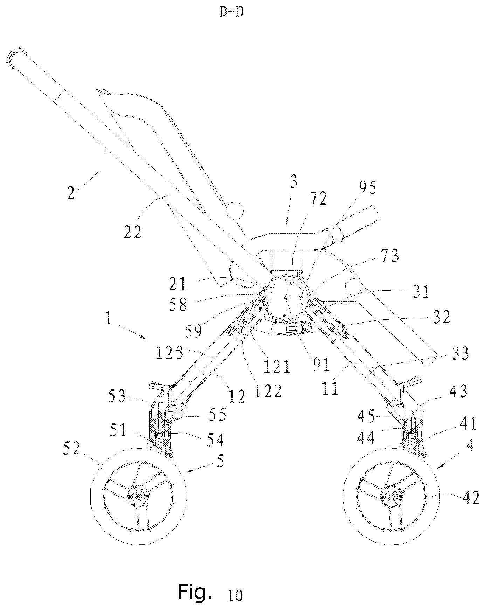

Fig. 10 is an enlarged section view of the portion D-D shown in fig. 8;

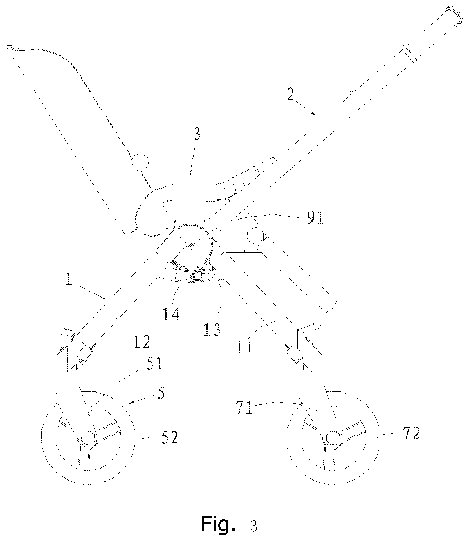

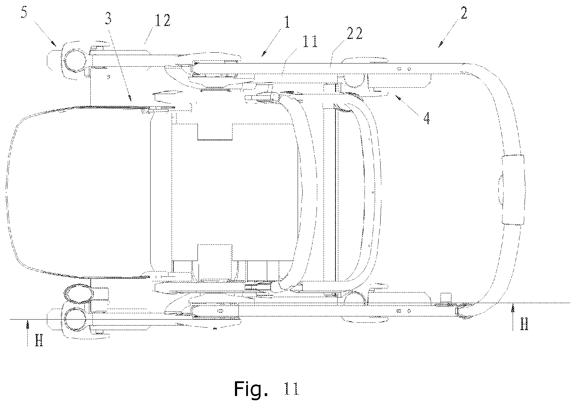

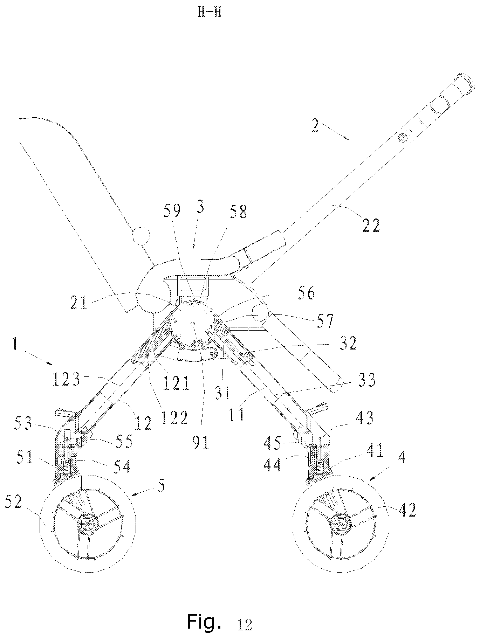

Fig.11 is a top view of the frame of the fig.3. wherein: 1, base bracket; 2. a push rod bracket; 3. a seat; 4. a front wheel assembly; 5. a rear wheel assembly; 11. a front bracket; 12. a rear bracket; 13. a first base connecting rod; 14. a second base connecting rod; 21. a push rod seat; 22. a push rod; 31. a front sliding block; 32. a front reversing member; 33. a front traction rope; 41. a front wheel joint; 42. a front wheel; 43. a front wheel steering shaft; 44. a front wheel directional sliding block; 45. a front wheel elastic member; 51. a rear wheel joint; 52. a rear wheel; 53. a rear wheel steering shaft; 54. a rear wheel directional sliding block; 55. a rear wheel elastic member; 121. a rear sliding block; 122. a rear reversing member. 123. a rear traction rope; 56. a first accommodating groove; 57. a first slope; 58. a second accommodating groove; 59. a second slope; 61. an unlocking button; 71. a locking element; 72. a first locking groove; 73. a second locking groove; 81. a first positioning block; 82. a second positioning block; 83. a first positioning groove; 84. a second positioning groove; 91. a first shaft; 92. a second shaft; 93. a third shaft; 94. a fourth shaft; 95. a fifth shaft.

### Description of the Preferred Embodiments

As shown in fig's, a baby carriage comprises a frame having an unfolded position and a folded position, a seat 3, a front wheel assembly 4, a rear wheel assembly 5 and a locking mechanism for locking the frame when it is in an unfolded position.

The frame comprises a folding base bracket 1 and a push rod bracket 2. The push rod bracket 2 comprises a push rod seat 21 rotatably connected with the base bracket 1 by a first shaft 91, and a push rod 22 only slidably disposed on the push rod seat 21. The locking mechanism comprises a bracket locking mechanism for locking the base bracket 1, a reversing locking mechanism disposed between the push rod seat 21 and the base bracket 1, and a telescoping locking mechanism disposed between the push rod seat 21 and the push rod 22. The first shaft 91 is located on the push rod seat 21. The front wheel assembly 4 is disposed at the bottom and a front portion of the base bracket 1, and the rear wheel assembly 5 is disposed at the bottom and a rear portion of the base bracket 1.

In this embodiment, the base bracket 1 comprises:
a front bracket 11, the front wheel assembly 4 is disposed at the lower portion of the front bracket 11;
a rear bracket 12, the upper portion of the front bracket 11 is rotatably connected with the upper portion of the rear bracket 12 around a first shaft 91, and the rear wheel assembly 5 is disposed at the lower portion of the rear bracket 12;
a first base connecting rod 13, the front portion of the first base connecting rod 13 is rotatably connected with the front bracket 11 around a second shaft 92;
a second base connecting rod 14, the rear portion of the second base connecting rod 14 is rotatably connected with the rear bracket 12 around a third shaft 93, the rear portion of the first base connecting rod 13 is rotatably connected with the front portion of the second base connecting rod 14 around a fourth shaft 94. The bracket locking mechanism is disposed between the first base connecting rod 13 and the second base connecting rod 14.

The front bracket 11, the rear bracket 12, the first base connecting rod 13 and the second base connecting rod 14 constitutes a four-link mechanism. Provided that one of the first shaft 91, the second shaft 92, the third shaft 93 and the fourth shaft 94 is locked, the four-link mechanism can be locked to form a stable triangle mechanism.

In this embodiment, the bracket locking mechanism is disposed between the first base connecting rod 13 and the second base connecting rod 14, and comprises an unlocking button 61 for unlocking. In the course of push rod 22 sliding down relative to the push rod seat 21, the push rod 22 is able to press the unlocking button 61 to unlock the bracket locking mechanism, and this provides an easy unlocking to facilitate the folding of the base bracket. The specific structure of the bracket locking mechanism is not involved by the technical points of the utility models, and any locking mechanism is applicable here provided that it can lock two rotating parts. For example, an elastic unlocking button is rotatably or slidably disposed on one of the first base connecting rod 13 and the second base connecting rod 14 and a locking groove is opened on the other of the two, such that the unlocking button 61 is inserted into the locking groove in the locked state. The push rod 22 right activates the unlocking button 61 when it slides down relative to the push rod seat 21.

Beyond that, not shown, the base bracket 1 also may be configured as other configurations, for example, the second base connecting rod 14 is omitted, the front portion of the first base connecting rod 13 is rotatably connected with the front bracket 11 around the second shaft, and the rear portion of the first base connecting rod 13 and the rear bracket 21 can slide up and down or rotate around a shaft.

The front wheel assembly 4 comprises a front wheel joint 41 and a front wheel 42 rotatably connected on the front wheel joint 41, the front wheel joint 41 is rotatably connected with the front bracket 11 around a front wheel steering shaft 43, and a front wheel directional mechanism having a locked position and an unlocked position is disposed between the front wheel joint 41 and the front bracket 11, the front wheel directional mechanism comprises a front wheel elastic member 45 which is able to make the front wheel directional mechanism stable in locked position thereof. The front wheel steering shaft 43 extends along a vertical direction.

The rear wheel assembly 5 comprises a rear wheel joint 51 and a rear wheel 52 rotatably connected on the rear wheel joint 51. The rear wheel joint 51 is rotatably connected with the rear bracket 12 around a rear wheel steering shaft 53, and a rear wheel directional mechanism having a locked position and an unflocked position is disposed between the rear wheel joint 51 and the rear bracket 12, and the rear wheel directional mechanism comprises a rear wheel elastic member 55 which is able to make the rear wheel directional mechanism stable in folded position thereof. The rear wheel steering shaft 53 extends along a vertical direction.

The base bracket 1 is provided with a front wheel control mechanism for controlling the unlocking of the front wheel directional mechanism and a rear wheel control mechanism for controlling the unlocking of the rear wheel directional mechanism. The front wheel control mechanism comprises a front traction rope 33, and the rear wheel control mechanism comprises a rear traction rope 123.

The push rod bracket 2 has a first working position and a second working position. When the push rod bracket 2 rotates into the first working position around the first shaft 91, the push rod 22 inclines backwards from down to up, and the front traction rope 33 overcomes an elastic force of the front wheel elastic member 45 to be dragged, the front wheel directional mechanism is in the unlocked position, and the rear wheel directional mechanism is in the locked position. When the push rod bracket 2 rotates into the second working position around the first shaft 91, the push rod 22 inclines forwards from down to up, the front wheel directional mechanism is in the locked position, the rear traction rope 123 overcomes an elastic force of the rear wheel elastic member 55 to be dragged, the rear wheel directional mechanism is in the unlocked position.

The push rod bracket 2 also has a third working position, in the third working position, the push rod 22 substantially is vertically kept in the up-down direction, the front traction rope 33 overcomes the elastic force of the front wheel elastic member 45 to be dragged, and the front wheel directional mechanism is in the unlocked position, the rear traction rope 123 overcomes the elastic force of the rear wheel elastic member 55 to be dragged, and the rear wheel directional mechanism is in the unlocked position.

The front wheel control mechanism also comprises a front sliding block 31 slidably disposed on the base bracket 1 and in front of the first shaft 91, and a front reversing member 32 fixedly or rotatably disposed on the front bracket 11. The front traction rope 33 winds over the front reversing member 32 such that its upper portion is connected with the front sliding block 31. The front sliding block 31 moves upwards when the front traction rope 33 is pulled downwards, vice versa, the front traction rope 33 is pulled upwards when the front sliding block 31 move downwards. A first accommodating groove 56 is opened on the push rod seat 21, and one side of the first accommodating groove 56 is a first slope 57. When the push rod bracket 2 rotates into the second working position around the first shaft 91, the front sliding block 31 is inserted into the first accommodating groove 56 and the front sliding block 31 draws close to the first shaft 91. When the push rod bracket 2 rotates into the third working position or the first working position around the first shaft 91, the front sliding block 31 is detached from the first accommodating groove 56 under the action of the first slope 57, and the front sliding block 31 is far away from the first shaft 91. Wherein the front sliding block 31 is slidably disposed on the front bracket 11, or alternatively, another front wheel control mechanism may be utilized so that the front sliding block 31 and the front reversing member 32 are omitted, and the upper portion of the front traction rope 33 is directly connected with the push rod seat 21.

As shown in fig's 6, 10 and 12, similarly, the rear wheel control mechanism also comprises a rear sliding block 121 slidably disposed on the base bracket 1 and in back of the first shaft 91, and a rear reversing member 122 fixedly or rotatably disposed on the rear bracket 12, the rear traction rope 123 rounds over the rear reversing member 122 such that its upper portion is connected with the rear sliding block 122. The rear sliding block 121 moves upwards when the rear traction rope 123 is pulled downwards, vice versa, the rear traction rope 123 is drawn upwards when the rear sliding block 121 moves downwards. A second accommodating groove 58 is opened on the push rod seat 21 and one side of the second accommodating groove 58 is a second slope 59.i When the push rod bracket 2 rotates into the second working position or the third position around the first shaft 91, the rear sliding block 121 is detached form the second accommodating groove 58 under the action of the second slope and the rear sliding block 121 is far away from the first shaft 91. When the push rod bracket 2 rotates into the first working position around the first shaft 91, the rear sliding block 121 is again inserted into the second accommodating groove 58 along the second slope 59, and the rear sliding block 121 draws close to the first shaft 91. The rear sliding block 121 is slidably disposed on the rear bracket 12. Similarly, another rear wheel control mechanism may be utilized so that the rear sliding block 121 and the rear reversing member 122 are omitted, and the upper portion of the rear traction rope 123 is directly connected with the push rod seat 21. The front wheel directional mechanism comprises a front wheel directional sliding block 44 slidably or rotatably disposed on the front bracket 11, the front wheel elastic member 45 is disposed between the front wheel directional sliding block 44 and the front bracket 11, and the lower portion of the front traction rope 33 is connected with the front wheel directional sliding block 44. The rear wheel directional mechanism comprises a rear wheel directional sliding block 54 slidably or rotatably disposed on the rear bracket 12, the rear wheel elastic member 55 is disposed between the rear wheel directional sliding block 54 and the rear bracket 12, and the lower portion of the rear traction rope 123 is connected with the rear wheel directional sliding block 54.

The reversing locking mechanism can lock the push rod bracket 2 in the first working position or the second working position relative to the base bracket, and the frame can be pushed in positive and negative direction. In this embodiment, the push rod seat 21 and the upper portion of the front bracket 11 are rotatably connected with the upper portion of the rear bracket 12 around the first shaft 91. The reversing locking mechanism comprises a locking element 71 having a locking tongue and rotatably connected on the push rod seat 21 around a fifth shaft 95, and a first locking groove 72 and second locking groove 73 opened on an upper portion of the front bracket 11 and/or an upper portion of the rear bracket 12. The push rod bracket 2 has a first working position and a second working position. When in the first working position, the push rod bracket 2 is inclined backwards such that the locking tongue is inserted into the first locking groove 72. When in the second working position, the push rod bracket 2 is inclined forwards such that the locking tongue is inserted into the second locking groove 73, and the fifth shaft 95 is deviated from the first shaft 91. When the base bracket 1 is in the unfolded position, the front wheel bracket 11 and the rear wheel bracket 12 are in a fixed state, thus, the push rod bracket 2 can be locked with the front wheel bracket 11 or the rear wheel bracket 12. A shifting block is slidably disposed on the push rod 22, the shifting block can activate the locking element 71 to rotate around the fifth shaft 95 during it's sliding. Beyond that, not shown, the locking element 71 also can be slidably provided on the push rod seat 21, and converts between the first locking groove 72 and the second locking groove 73 by means of sliding.

The telescoping locking mechanism can lock the push rod 22 in the first working position and the second working position. When the push rod 22 is in the first working position, the push rod seat 21 is fixedly located at the lower portion of the push rod 22. When the push rod 22 is in the second working position, the push rod seat 21 is fixedly located at the upper portion of the push rod 22. As shown in fig's 2 and 7, the push rod bracket 2 can be vertically placed after the reversing locking mechanism is unlocked, then the telescoping locking mechanism is unlocked, and the push rod 22 is pressed down such that the frame locking mechanism is unlocked and the frame is folded.

In this embodiment, the telescoping locking mechanism comprises a first positioning groove 83 opened on the push rod seat 21, a second positioning groove 84 opened on the push rod seat 21 and below the first positioning groove 83, a first positioning block 81 slidably disposed on the lower portion of the push rod 22 and a second positioning block 82 slidably disposed on the upper portion of the push rod 22. When the frame is in the unfolded position, the first positioning block 81 is inserted into the first positioning groove 83, when the frame is in the folded position, the second positioning block 82 is inserted into the second positioning groove 84, and the frame is locked in the folded position. A control mechanism is provided on the push rod 22 for controlling the action of the first positioning block 81 and the second positioning block 82. The specific structure of the control mechanism is not involved by the technical points of the utility models, and thus will not be described in more detail here. The control mechanism generally comprises an operation button, a traction rope, a restoring elastic member and the like. The second positioning groove 84 at a lower side thereof has a first inclined plane which is able to contact against the first positioning block 81 such that the first positioning block 81 exits downwards the second positioning groove 84, the first positioning block 81 at an upper portion thereof has a second inclined plane which is able to contact against the upper portion of the opening portion of the second positioning groove 84 such that the first positioning block 81 exits upwards the second positioning groove 84, When the push rod 22 slides, the second locking groove 84 and the first positioning block 81 cannot be locked, and the first positioning block 82 at a lower portion thereof has a third inclined plane which is able to contact against a lower portion of the opening portion of the first positioning groove 83 such that the second positioning block exits the first positioning groove 83. When the push rod 22 slides down, the first locking groove 83 and the second positioning block 82 cannot be locked.

As described above, the specific embodiments of the utility models are illustrated as above in terms of the objective of the utility models , however, the utility models is not limited to the above embodiments and implementing methods, and it is obvious that many modifications can be made to the prior art without departing from the scope of the utility models.

## Claims

1. A baby carriage, comprising a folding frame, a seat (3) disposed on the frame, a front wheel assembly (4), a rear wheel assembly (5) and a locking mechanism for locking the frame when the frame is in an unfolded state, wherein:
the frame comprises a push rod bracket (2) and a folding base bracket (1), the push rod bracket (2) comprising a push rod seat (21) rotatably connected with the base bracket (1) by a first shaft (91), and a push rod (22) only slidably disposed on the push rod seat (21); and
the locking mechanism comprises a bracket locking mechanism for locking the base bracket (1), a reversing locking mechanism disposed on the push rod bracket (2) and/or base bracket (1) for relatively locking the push rod bracket (2) with the base bracket (1), and a telescoping locking mechanism disposed on the push rod seat (21) and/or the push rod (22) for relatively locking the push rod (22) with the push rod seat (21), **characterised in that** the telescoping locking mechanism can lock the push rod (22) in the first working position and the second working position, when the push rod (22) is in the first working position, the push rod seat (21) is fixedly located at the lower portion of the push rod (22), when the push rod (22) is in the second working position, the push rod seat (21) is fixedly located at the upper portion of the push rod (22).

2. The baby carriage as claimed in claim 1, wherein the base bracket (1) comprises:
a front bracket (11) at a lower portion of which the front wheel assembly (4) is disposed, and
a rear bracket (12) at a lower portion of which the rear wheel assembly (5) is disposed, the upper portion of the front bracket (11) being rotatably connected with the upper portion of the rear bracket (12) by the first shaft (91).

3. The baby carriage as claimed in claim 2, wherein the front wheel assembly (4) comprises a front wheel joint (41) and a front wheel (42) rotatably connected on the front wheel joint (41), the front wheel joint (41) being rotatably connected with the front bracket (11) by a front wheel steering shaft (43) extending along a vertical direction, and a front wheel directional mechanism having a locked position and an unlocked position being disposed between the front wheel joint (41) and the front bracket (11), the front wheel directional mechanism comprising a front wheel elastic member (45) which is able to make it stable in locked position thereof;
the rear wheel assembly (5) comprises a rear wheel joint (51) and a rear wheel (52) rotatably connected on the rear wheel joint (51), the rear wheel joint (51) being rotatably connected with the rear bracket (12) by a rear wheel steering shaft (53) extending along a vertical direction, and a rear wheel directional mechanism having a locked position and an unlocked position being disposed between the rear wheel joint (51) and the rear bracket (12), the rear wheel directional mechanism comprising a rear wheel elastic member (55) which is able to make it stable in folded position thereof;
the base bracket (1) is provided with a front wheel control mechanism for controlling the unlocking of the front wheel directional mechanism and a rear wheel control mechanism for controlling the unlocking of the rear wheel directional mechanism, the front wheel control mechanism comprising a front traction rope (33), the rear wheel control mechanism comprising a rear traction rope (123), and a push rod positioning mechanism being disposed between the base bracket (1) and the push rod bracket (2);
the push rod bracket (2) has a first working position, a second working position and a third working position, in the first working position, the push rod (22) inclines backwards from down to up, and the front traction rope (33) overcomes an elastic force of the front wheel elastic member (45) to be dragged, and the front wheel directional mechanism is in the unlocked position, the rear wheel directional mechanism is in the locked position; in the second working position, the push rod (22) inclines forwards from down to up, the front wheel directional mechanism is in the locked position, the rear traction rope (123) overcomes an elastic force of the rear wheel elastic member (55) to be dragged, and the rear wheel directional mechanism is in the unlocked position; in the third position, the push rod (22) substantially is kept in the vertical direction, the front traction rope (33) overcomes the elastic force of the front wheel elastic member (45) to be dragged, the front wheel directional mechanism is in the unlocked position, the rear traction rope (123) overcomes the elastic force of the rear wheel elastic member (55) to be dragged, and the rear wheel directional mechanism is in the unlocked position.

4. The baby carriage as claimed in claim 3, wherein the front wheel control mechanism also comprises a front sliding block (31) slidably disposed on the base bracket (1) and in front of the first shaft (91), and a front reversing member (32) fixedly or rotatably disposed on the front bracket (11), the front traction rope (33) winding over the front reversing member (32) such that its upper portion is connected with the front sliding block (31), a first accommodating groove (56) being opened on the push rod seat (21), one side wall of the first accommodating groove (56) is a first slope (57), when the push rod bracket (2) rotates around the first shaft (91) into the second working position, the front sliding block (31) is inserted into the first accommodating groove (56) and the front sliding block (31) draws close to the first shaft (91), when the push rod bracket (2) rotates around the first shaft (91) into the third working position or the first working position, the front sliding block (31) is detached from the first accommodating groove (56), and the front sliding block (31) is far away from the first shaft (91).

5. The baby carriage as claimed in claim 4, wherein the front sliding block (31) is slidably disposed on the front bracket (11).

6. The baby carriage as claimed in claim 3, wherein the rear wheel control mechanism also comprises a rear sliding block (121) slidably disposed on the base bracket (1) and in back of the first shaft (91), and a rear reversing member (122) fixedly or rotatably disposed on the rear bracket (12), the rear traction rope (123) winding over the rear reversing member (122) such that its upper portion is connected with the rear sliding block (121), a second accommodating groove (58) being opened on the push rod seat (21), and one side wall of the second accommodating groove (58) is a second slope (59) when the push rod bracket (2) rotates around the first shaft (91) into the second working position or the third position, the rear sliding block (121) is detached form the second accommodating groove (58) and the rear sliding block (121) is far away from the first shaft (91), when the push rod bracket (2) rotates around the first shaft (91) into the first working position, the rear sliding block (121) is inserted into the second accommodating groove (58), and the rear sliding block (121) draws close to the first shaft (91).

7. The baby carriage as claimed in claim 6, wherein the rear sliding block (121) is slidably disposed on the rear bracket (12).

8. The baby carriage as claimed in claim 3, wherein the front wheel directional mechanism comprises a front wheel directional sliding block (44) slidably or rotatably disposed on the front bracket (11), the front wheel elastic member (45) being disposed between the front wheel directional sliding block (44) and the front bracket (11), and a lower portion of the front traction rope (33) being connected with the front wheel directional sliding block (44), the rear wheel directional mechanism comprising a rear wheel directional sliding block (54) slidably or rotatably disposed on the rear bracket (12), the rear wheel elastic member (55) being disposed between the rear wheel directional sliding block (54) and the rear bracket (12), and a lower portion of the rear traction rope (123) being connected with the rear wheel directional sliding block (54).

9. The baby carriage as claimed in claim 2, wherein the base bracket (1) also comprises:
a first base connecting rod (13) with the front portion being rotatably connected with the front bracket (11) by a second shaft (92); and
a second base connecting rod (14) with the rear portion being rotatably connected with rear bracket (12) by a third shaft (93), the rear portion of the first base connecting rod (13) being rotatably connected with the front portion of the second base connecting rod (14) by a fourth shaft (94);
the bracket locking mechanism being disposed between the first base connecting rod (13) and the second base connecting rod (14).

10. The baby carriage as claimed in claim 1, wherein the bracket locking mechanism comprises an unlocking button (61) for unlocking, in the course of push rod (22) sliding down relative to the push rod seat (21), the push rod (22) is able to press the unlocking button (61) to unlock the bracket locking mechanism.

11. The baby carriage as claimed in claim 3, wherein the reversing locking mechanism comprises a locking element with a locking tongue and rotatably connected on the push rod seat (21) by a fifth shaft (95), and a first locking groove (72) and second locking groove (73) opened on an upper portion of the front bracket (11) and/or an upper portion of the rear bracket (12), when the push rod bracket (2) is in the first working position, the locking tongue is inserted into the first locking groove (72), when the push rod bracket (2) is in the second working position, the locking tongue is inserted into the second locking groove (73), the fifth shaft (95) is deviated from the first shaft (91), and a locking element elastic member being disposed between the locking element (71) and the push rod seat (21) for making the locking tongue be steadily inserted into the first locking groove (72) or the second locking groove (73).

12. The baby carriage as claimed in claim 1, wherein the telescoping locking mechanism comprises a first positioning groove (83) opened on the push rod seat (21), a second positioning groove (84) opened on the push rod seat (21) and below the first positioning groove (83), a first positioning block (81) rotatably or slidably disposed on a lower portion of the push rod (22) and a second positioning block (82) rotatably or slidably disposed on an upper portion of the push rod (22), when the frame is unfolded, the first positioning block (81) is inserted into the first positioning groove (83), when the frame is folded, the second positioning block (82) is inserted into the second positioning groove (84), a control mechanism being provided on the push rod (22) for controlling the action of the first positioning block (81) and the second positioning block (82).

13. The baby carriage as claimed in claim 12, wherein the second positioning groove (84) at a lower side thereof has a first inclined plane which is able to contact against the first positioning block (81) such that the first positioning block (81) exit downwards the second positioning groove (84), the first positioning block (81) at an upper portion thereof having a second inclined plane which is able to contact against an upper portion of the opening portion of the second positioning groove (84) such that the first positioning block (81) exits upwards the second positioning groove (84), and the second positioning block (82) at a lower portion thereof having a third inclined plane which is able to contact against a lower portion of the opening portion of the first positioning groove (83) such that the second positioning block (82) exits downwards the first positioning groove (83).

## Patentansprüche

1. Kinderwagen mit einem Klapprahmen, einem am Rahmen angeordneten Sitz (3), einer Vorderradanordnung (4), einer Hinterradanordnung (5) und einem Verriegelungsmechanismus zum Verriegeln des Rahmens in einem aufgeklappten Zustand, wobei:
der Rahmen einen Schiebestangenhalter (2) und einen klappbaren Basishalter (1) aufweist, wobei der Schiebestangenhalter (2) eine Schiebestangenaufnahme (21), die durch eine erste Welle (91) mit dem Basishalter (1) drehbar verbunden ist, und eine Schiebestange (22) aufweist, die nur gleitend auf der Schiebestangenaufnahme (21) angeordnet ist; und
der Verriegelungsmechanismus einen Halterverriegelungsmechanismus zum Verriegeln des Basishalters (1), einen am Schiebestangenhalter (2) und/oder am Basishalter (1) angeordneten Umstellverriegelungsmechanismus zum relativen Verriegeln des Schiebestangenhalters (2) mit dem Basishalter (1), und einen auf der Schiebestangenaufnahme (21) und/oder auf der Schiebestange (22) angeordneten, teleskopartig beweglichen Verriegelungsmechanismus zum relativen Verriegeln der Schiebestange (22) mit der Schiebestangenaufnahme (21) aufweist;
**dadurch gekennzeichnet, dass**
der teleskopartig bewegliche Verriegelungsmechanismus dazu geeignet ist, die Schiebestange (22) in der ersten Arbeitsposition und in der zweiten Arbeitsposition zu verriegeln, wobei, wenn die Schiebestange (22) sich in der ersten Arbeitsposition befindet, die Schiebestangenaufnahme (21) fest am unteren Abschnitt der Schiebestange (22) angeordnet ist, und wenn die Schiebestange (22) sich in der zweiten Arbeitsposition befindet, die Schiebestangenaufnahme (21) fest am oberen Abschnitt der Schiebestange (22) angeordnet ist.

2. Kinderwagen nach Anspruch 1, wobei der Basishalter (1) aufweist:
einen vorderen Halter (11), woran an einem unterem Abschnitt die Vorderradanordnung (4) angeordnet ist, und
einen hinteren Halter (12), woran an einem unterem Abschnitt die Hinterradanordnung (5) angeordnet ist, wobei der obere Abschnitt des vorderen Halters (11) über die erste Welle (91) mit dem oberen Abschnitt des hinteren Halters (12) drehbar verbunden ist.

3. Kinderwagen nach Anspruch 2, wobei
die Vorderradanordnung (4) ein Vorderradgelenk (41) und ein mit dem Vorderradgelenk (41) drehbar verbundenes Vorderrad (42) aufweist, wobei das Vorderradgelenk (41) durch eine sich entlang einer vertikalen Richtung erstreckende Vorderradlenkwelle (43) mit dem vorderen Halter (11) drehbar verbunden ist, und wobei ein Vorderradausrichtungsmechanismus, der eine verriegelte Position und eine entriegelte Position aufweist, zwischen dem Vorderradgelenk (41) und dem vorderen Halter (11) angeordnet ist, wobei der Vorderradausrichtungsmechanismus ein elastisches Vorderradelement (45) aufweist, das dazu geeignet ist, ihn in seiner verriegelten Position zu stabilisieren;
die Hinterradanordnung (5) ein Hinterradgelenk (51) und ein mit dem Hinterradgelenk (51) drehbar verbundenes Hinterrad (52) aufweist, wobei das Hinterradgelenk (51) durch eine sich entlang einer vertikalen Richtung erstreckende Hinterradlenkwelle (53) mit dem hinteren Halter (12) drehbar verbunden ist, und wobei ein Hinterradausrichtungsmechanismus, der eine verriegelte Position und eine entriegelte Position aufweist, zwischen dem Hinterradgelenk (51) und dem hinteren Halter (12) angeordnet ist, wobei der Hinterradausrichtungsmechanismus ein elastisches Hinterradelement (55) aufweist, das dazu geeignet ist, ihn in seiner ausgeklappten Position zu stabilisieren;
der Basishalter (1) einen Vorderradsteuermechanismus zum Steuern der Entriegelung des Vorderradausrichtungsmechanismus und einen Hinterradsteuermechanismus zum Steuern der Entriegelung des Hinterradausrichtungsmechanismus aufweist, wobei der Vorderradsteuermechanismus ein vorderes Zugseil (33) aufweist, der Hinterradsteuermechanismus ein hinteres Zugseil (123) aufweist, und wobei ein Schiebestangenpositionierungsmechanismus zwischen dem Basishalter (1) und dem Schiebestangenhalter (2) angeordnet ist;
der Schiebestangenhalter (2) eine erste Arbeitsposition, eine zweite Arbeitsposition und eine dritte Arbeitsposition aufweist, wobei in der ersten Arbeitsposition die Schiebestange (22) von unten nach oben in Rückwärtsrichtung geneigt ist und das vordere Zugseil (33) eine elastische Kraft des zu ziehenden elastischen Vorderradelements (45) überwindet und der Vorderradausrichtungsmechanismus sich in der entriegelten Position befindet und der Hinterradausrichtungsmechanismus sich in der verriegelten Position befindet;
in der zweiten Arbeitsposition die Schiebestange (22) von unten nach oben in Vorwärtsrichtung geneigt ist, der Vorderradausrichtungsmechanismus sich in der verriegelten Position befindet, das hintere Zugseil (123) eine elastische Kraft des zu ziehenden elastischen Hinterradelements (55) überwindet und der Hinterradausrichtungsmechanismus sich in der entriegelten Position befindet;
in der dritten Arbeitsposition die Schiebestange (22) im Wesentlichen in der vertikalen Richtung gehalten wird, das vordere Zugseil (33) die elastische Kraft des zu ziehenden elastischen Vorderradelements (45) überwindet der Vorderradausrichtungsmechanismus sich in der entriegelten Position befindet, das hintere Zugseil (123) die elastische Kraft des zu ziehenden elastischen Hinterradelements (55) überwindet und der Hinterradausrichtungsmechanismus sich in der entriegelten Position befindet.

4. Kinderwagen nach Anspruch 3, wobei der Vorderradsteuermechanismus außerdem einen vorderen Gleitblock (31), der auf dem Basishalter (1) und vor der ersten Welle (91) gleitend angeordnet ist, und ein auf dem vorderen Halter (11) fest oder drehbar angeordnetes vorderes Umlenkelement (32) aufweist, wobei das vordere Zugseil (33) über das vordere Umlenkelement (32) geführt ist, so dass sein oberer Abschnitt mit dem vorderen Gleitblock (31) verbunden ist, wobei eine erste Aufnahmenut (56) auf der Schiebestangenaufnahme (21) ausgebildet ist, wobei eine Seitenwand der ersten Aufnahmenut (56) eine erste Schräge (57) ist, wobei, wenn der Schiebestangenhalter (2) um die erste Welle (91) in die zweite Arbeitsposition gedreht wird, der vordere Gleitblock (31) mit der ersten Aufnahmenut (56) in Eingriff kommt und der vordere Gleitblock (31) sich der ersten Welle (91) annähert, und wenn der Schiebestangenhalter (2) um die erste Welle (91) in die dritte Arbeitsposition oder in die erste Arbeitsposition gedreht wird, der vordere Gleitblock (31) von der ersten Aufnahmenut (56) außer Eingriff kommt und der vordere Gleitblock (31) weit von der ersten Welle (91) entfernt ist.

5. Kinderwagen nach Anspruch 4, wobei der vordere Gleitblock (31) auf dem vorderen Halter (11) gleitend angeordnet ist.

6. Kinderwagen nach Anspruch 3, wobei der Hinterradsteuermechanismus außerdem einen hinteren Gleitblock (121), der auf dem Basishalter (1) und hinter der ersten Welle (91) gleitend angeordnet ist, und ein auf dem hinteren Halter (12) fest oder drehbar angeordnetes hinteres Umlenkelement (122) aufweist, wobei das hintere Zugseil (123) über das hintere Umlenkelement (122) geführt ist, so dass sein oberer Abschnitt mit dem hinteren Gleitblock (121) verbunden ist, wobei eine zweite Aufnahmenut (58) auf der Schiebestangenaufnahme (21) ausgebildet ist, wobei eine Seitenwand der zweiten Aufnahmenut (58) eine zweite Schräge (59) ist, wobei, wenn der Schiebestangenhalter (2) um die erste Welle (91) in die zweite Arbeitsposition oder in die dritte Arbeitsposition gedreht wird, der hintere Gleitblock (121) von der zweiten Aufnahmenut (58) außer Eingriff kommt und der hintere Gleitblock (121) weit von der ersten Welle (91) entfernt ist, und wenn der Schiebestangenhalter (2) um die erste Welle (91) in die erste Arbeitsposition gedreht wird, der hintere Gleitblock (121) mit der zweiten Aufnahmenut (58) in Eingriff kommt und sich der hintere Gleitblock (121) der ersten Welle (91) annähert.

7. Kinderwagen nach Anspruch 6, wobei der hintere Gleitblock (121) auf dem hinteren Halter (12) gleitend angeordnet ist.

8. Kinderwagen nach Anspruch 3, wobei der Vorderradausrichtungsmechanismus einen Vorderradausrichtungsgleitblock (44) aufweist, der auf dem vorderen Halter (11) gleitend oder drehbar angeordnet ist, wobei das elastische Vorderradelement (45) zwischen dem Vorderradausrichtungsgleitblock (44) und dem vorderen Halter (11) angeordnet ist, und wobei ein unterer Abschnitt des vorderen Zugseils (33) mit dem Vorderradausrichtungsgleitblock (44) verbunden ist, wobei der Hinterradausrichtungsmechanismus einen Hinterradausrichtungsgleitblock (54) aufweist, der auf dem hinteren Halter (12) gleitend oder drehbar angeordnet ist, wobei das elastische Hinterradelement (55) zwischen dem Hinterradausrichtungsgleitblock (54) und dem hinteren Halter (12) angeordnet ist, und wobei ein unterer Abschnitt des hinteren Zugseils (123) mit dem Hinterradausrichtungsgleitblock (54) verbunden ist.

9. Kinderwagen nach Anspruch 2, wobei der Basishalter (1) außerdem aufweist:
eine erste Basisverbindungsstange (13), deren vorderer Abschnitt über eine zweite Welle (92) mit dem vorderen Halter (11) drehbar verbunden ist; und
eine zweite Basisverbindungsstange (14), deren hinterer Abschnitt über eine dritte Welle (93) mit dem hinteren Halter (12) drehbar verbunden ist, wobei der hintere Abschnitt der ersten Basisverbindungsstange (13) mit dem vorderen Abschnitt der zweiten Basisverbindungsstange (14) über eine vierte Welle (94) drehbar verbunden ist;
wobei der Halterverriegelungsmechanismus zwischen der ersten Basisverbindungsstange (13) und der zweiten Basisverbindungsstange (14) angeordnet ist.

10. Kinderwagen nach Anspruch 1, wobei der Halterverriegelungsmechanismus einen Entriegelungsknopf (61) zum Entriegeln aufweist, wobei, während die Schiebestange (22) relativ zur Schiebestangenaufnahme (21) nach unten gleitet, die Schiebestange (22) in der Lage ist, den Entriegelungsknopf (61) zu drücken, um den Halterverriegelungsmechanismus zu entriegeln.

11. Kinderwagen nach Anspruch 3, wobei der Umstellverriegelungsmechanismus ein Verriegelungselement mit einer Verriegelungszunge aufweist und über eine fünfte Welle (95) drehbar mit der Schiebestangenaufnahme (21) verbunden ist, und wobei eine erste Verriegelungsnut (72) und eine zweite Verriegelungsnut (73) auf einem oberen Abschnitt des vorderen Halters (11) und/oder auf einem oberen Abschnitt des hinteren Halters (12) ausgebildet sind, wobei, wenn sich der Schiebestangenhalter (2) in der ersten Arbeitsposition befindet, die Verriegelungszunge mit der ersten Verriegelungsnut (72) in Eingriff steht, wenn sich der Schiebestangenhalter (2) in der zweiten Arbeitsposition befindet, die Verriegelungszunge mit der zweiten Verriegelungsnut (73) in Eingriff steht, die fünfte Welle (95) von der ersten Welle (91) versetzt ist und ein elastisches Verriegelungselement zwischen dem Verriegelungselement (71) und der Schiebestangenaufnahme (21) angeordnet ist, um zu veranlassen, dass die Verriegelungszunge stetig mit der ersten Verriegelungsnut (72) oder mit der zweiten Verriegelungsnut (73) in Eingriff kommt.

12. Kinderwagen nach Anspruch 1, wobei der teleskopartig bewegliche Verriegelungsmechanismus eine auf der Schiebestangenaufnahme (21) ausgebildete erste Positionierungsnut (83), eine auf der Schiebestangenaufnahme (21) und unter der ersten Positionierungsnut (83) ausgebildete zweite Positionierungsnut (84), einen ersten Positionierungsblock (81), der auf einem unteren Abschnitt der Schiebestange (22) drehbar oder gleitend angeordnet ist, und einen zweiten Positionierungsblock (82) aufweist, der auf einem oberen Abschnitt der Schiebestange (22) drehbar oder gleitend angeordnet ist, wobei, wenn der Rahmen aufgeklappt ist, der erste Positionierungsblock (81) mit der ersten Positionierungsnut (83) in Eingriff steht, und wenn der Rahmen zusammengeklappt ist, der zweite Positionierungsblock (82) mit der zweiten Positionierungsnut (84) in Eingriff steht, wobei auf der Schiebestange (22) ein Steuermechanismus zum Steuern der Betätigung des ersten Positionierungsblocks (81) und des zweiten Positionierblock (82) vorgesehen ist.

13. Kinderwagen nach Anspruch 12, wobei die zweite Positionierungsnut (84) an einer Unterseite von ihr eine erste schiefe Ebene aufweist, die dazu geeignet ist, mit dem ersten Positionierungsblock (81) in Kontakt zu kommen, so dass der erste Positionierungsblock (81) nach unten aus der zweiten Positionierungsnut (84) heraustritt, wobei der erste Positionierungsblock (81) an einem oberen Abschnitt von ihm eine zweite schiefe Ebene aufweist, die dazu geeignet ist, mit einem oberen Abschnitt des Öffnungsabschnitts der zweiten Positionierungsnut (84) in Kontakt zu kommen, so dass der erste Positionierungsblock (81) nach oben aus der zweiten Positionierungsnut (84) heraustritt, und wobei der zweite Positionierblock (82) an einem unteren Abschnitt von ihm eine dritte schiefe Ebene aufweist, die dazu geeignet ist, mit einem unteren Abschnitt des Öffnungsabschnitts der ersten Positionierungsnut (83) in Kontakt zu kommen, so dass der zweite Positionierungsblock (82) nach unten aus der ersten Positionierungsnut (83) heraustritt.

## Revendications

1. Poussette, comprenant un châssis de pliage, un siège (3) disposé sur le châssis, un ensemble roue avant (4), un ensemble roue arrière (5) et un mécanisme de blocage pour bloquer le châssis lorsque le châssis est dans un état déplié, dans laquelle :
le châssis comprend un support de tige de poussée (2) et un support de base de pliage (1), le support de tige de poussée (2) comprenant un siège de tige de poussée (21) raccordé en rotation au support de base (1) par un premier arbre (91), et une tige de poussée (22) disposée uniquement en coulissement sur le siège de tige de poussée (21) ; et
le mécanisme de blocage comprend un mécanisme de blocage de support pour bloquer le support de base (1), un mécanisme de blocage d'inversion disposé sur le support de tige de poussée (2) et/ou le support de base (1) pour bloquer relativement le support de tige de poussée (2) avec le support de base (1), et un mécanisme de blocage télescopique disposé sur le siège de tige de poussée (21) et/ou la tige de poussée (22) pour bloquer relativement la tige de poussée (22) avec le siège de tige de poussée (21), **caractérisée en ce que** le mécanisme de blocage télescopique peut bloquer la tige de poussée (22) dans la première position de travail et la deuxième position de travail, lorsque la tige de poussée (22) est dans la première position de travail, le siège de tige de poussée (21) est situé à demeure au niveau de la portion inférieure de la tige de poussée (22), lorsque la tige de poussée (22) est dans la deuxième position de travail, le siège de tige de poussée (21) est situé fixement au niveau de la portion supérieure de la tige de poussée (22).

2. Poussette selon la revendication 1, dans laquelle le support de base (1) comprend :
un support avant (11) au niveau d'une portion inférieure duquel est disposé l'ensemble roue avant (4), et
un support arrière (12) au niveau d'une portion inférieure duquel est disposé l'ensemble roue arrière (5), la portion supérieure du support avant (11) étant raccordée en rotation à la portion supérieure du support arrière (12) par le premier arbre (91).

3. Poussette selon la revendication 2, dans laquelle l'ensemble roue avant (4) comprend un joint de roue avant (41) et une roue avant (42) raccordée en rotation sur le joint de roue avant (41), le joint de roue avant (41) étant raccordé en rotation au support avant (11) par un arbre de direction de roue avant (43) s'étendant le long d'une direction verticale, et un mécanisme directionnel de roue avant ayant une position bloquée et une position débloquée étant disposé entre le joint de roue avant (41) et le support avant (11), le mécanisme directionnel de roue avant comprenant un organe élastique de roue avant (45) qui est capable de le rendre stable dans sa position bloquée ;
l'ensemble roue arrière (5) comprend un joint de roue arrière (51) et une roue arrière (52) raccordée en rotation sur le joint de roue arrière (51), le joint de roue arrière (51) étant raccordé en rotation au support arrière (12) par un arbre de direction de roue arrière (53) s'étendant le long d'une direction verticale, et un mécanisme directionnel de roue arrière ayant une position bloquée et une position débloquée étant disposé entre le joint de roue arrière (51) et le support arrière (12), le mécanisme directionnel de roue arrière comprenant un organe élastique de roue arrière (55) qui est capable de le rendre stable dans sa position pliée ;
le support de base (1) est pourvu d'un mécanisme de commande de roue avant pour commander le déblocage du mécanisme directionnel de roue avant et d'un mécanisme de commande de roue arrière pour commander le déblocage du mécanisme directionnel de roue arrière, le mécanisme de commande de roue avant comprenant un câble de traction avant (33), le mécanisme de commande de roue arrière comprenant un câble de traction arrière (123), et un mécanisme de positionnement de tige de poussée étant disposé entre le support de base (1) et le support de tige de poussée (2) ;
le support de tige de poussée (2) a une première position de travail, une deuxième position de travail et une troisième position de travail, dans la première position de travail, la tige de poussée (22) s'incline vers l'arrière de bas en haut, et le câble de traction avant (33) surmonte une force élastique de l'organe élastique de roue avant (45) pour être traîné, et le mécanisme directionnel de roue avant est dans la position débloquée, le mécanisme directionnel de roue arrière est dans la position bloquée ; dans la deuxième position de travail, la tige de poussée (22) s'incline vers l'avant de bas en haut, le mécanisme directionnel de roue avant est dans la position bloquée, le câble de traction arrière (123) surmonte une force élastique de l'organe élastique de roue arrière (55) pour être traîné, et le mécanisme directionnel de roue arrière est dans la position débloquée ; dans la troisième position, la tige de poussée (22) est sensiblement conservée dans la direction verticale, le câble de traction avant (33) surmonte la force élastique de l'organe élastique de roue avant (45) pour être traîné, le mécanisme directionnel de roue avant est dans la position débloquée, le câble de traction arrière (123) surmonte la force élastique de l'organe élastique de roue arrière (55) pour être traîné, et le mécanisme directionnel de roue arrière est dans la position débloquée.

4. Poussette selon la revendication 3, dans laquelle le mécanisme de commande de roue avant comprend également un bloc de coulissement avant (31) disposé en coulissement sur le support de base (1) et à l'avant du premier arbre (91), et un organe d'inversion avant (32) disposé à demeure ou en rotation sur le support avant (11), le câble de traction avant (33) s'enroulant sur l'organe d'inversion avant (32) de sorte que sa portion supérieure soit raccordée au bloc de coulissement avant (31), une première rainure de réception (56) étant ouverte sur le siège de tige de poussée (21), une paroi de côté de la première rainure de réception (56) est une première pente (57), lorsque le support de tige de poussée (2) tourne autour du premier arbre (91) dans la deuxième position de travail, le bloc de coulissement avant (31) est inséré dans la première rainure de réception (56) et le bloc de coulissement avant (31) se rapproche du premier arbre (91), lorsque le support de tige de poussée (2) tourne autour du premier arbre (91) dans la troisième position de travail ou la première position de travail, le bloc de coulissement avant (31) est détaché de la première rainure de réception (56), et le bloc de coulissement avant (31) est éloigné du premier arbre (91).

5. Poussette selon la revendication 4, dans laquelle le bloc de coulissement avant (31) est disposé en coulissement sur le support avant (11).

6. Poussette selon la revendication 3, dans laquelle le mécanisme de commande de roue arrière comprend également un bloc de coulissement arrière (121) disposé en coulissement sur le support de base (1) et à l'arrière du premier arbre (91), et un organe d'inversion arrière (122) disposé à demeure ou en rotation sur le support arrière (12), le câble de traction arrière (123) s'enroulant sur l'organe d'inversion arrière (122) de sorte que sa portion supérieure soit raccordée au bloc de coulissement arrière (121), une seconde rainure de réception (58) étant ouverte sur le siège de tige de poussée (21), et une paroi de côté de la seconde rainure de réception (58) est une seconde pente (59) lorsque le support de tige de poussée (2) tourne autour du premier arbre (91) dans la deuxième position de travail ou la troisième position de travail, le bloc de coulissement arrière (121) est détaché de la seconde rainure de réception (58), et le bloc de coulissement arrière (121) est éloigné du premier arbre (91), lorsque le support de tige de poussée (2) tourne autour du premier arbre (91) dans la première position de travail, le bloc de coulissement arrière (121) est inséré dans la seconde rainure de réception (58), et le bloc de coulissement arrière (121) se rapproche du premier arbre (91).

7. Poussette selon la revendication 6, dans laquelle le bloc de coulissement arrière (121) est disposé en coulissement sur le support arrière (12).

8. Poussette selon la revendication 3, dans laquelle le mécanisme directionnel de roue avant comprend un bloc de coulissement directionnel de roue avant (44) disposé en coulissement ou en rotation sur le support avant (11), l'organe élastique de roue avant (45) étant disposé entre le bloc de coulissement directionnel de roue avant (44) et le support avant (11), et une portion inférieure du câble de traction avant (33) étant raccordée au bloc de coulissement directionnel de roue avant (44), le mécanisme directionnel de roue arrière comprenant un bloc de coulissement directionnel de roue arrière (54) disposé en coulissement ou en rotation sur le support arrière (12), l'organe élastique de roue arrière (55) étant disposé entre le bloc de coulissement directionnel de roue arrière (54) et le support arrière (12), et une portion inférieure du câble de traction arrière (123) étant raccordée au bloc de coulissement directionnel de roue arrière (54).

9. Poussette selon la revendication 2, dans laquelle le support de base (1) comprend également :
une première tige de raccordement de base (13) avec la portion avant raccordée en rotation au support avant (11) par un deuxième arbre (92) ; et
une seconde tige de raccordement de base (14) avec la portion arrière raccordée en rotation au support arrière (12) par un troisième arbre (93), la portion arrière de la première tige de raccordement de base (13) étant raccordée en rotation à la portion avant de la seconde tige de raccordement de base (14) par un quatrième arbre (94) ;
le mécanisme de blocage de support étant disposé entre la première tige de raccordement de base (13) et la seconde tige de raccordement de base (14).

10. Poussette selon la revendication 1, dans laquelle le mécanisme de blocage de support comprend un bouton de déblocage (61) pour le déblocage, au cours du coulissement vers le bas de la tige de poussée (22) par rapport au siège de tige de poussée (21), la tige de poussée (22) est capable d'enfoncer le bouton de déblocage (61) pour débloquer le mécanisme de blocage de support.

11. Poussette selon la revendication 3, dans laquelle le mécanisme de blocage d'inversion comprend un élément de blocage avec une languette de blocage et raccordé en rotation sur le siège de tige de poussée (21) par un cinquième arbre (95), et une première rainure de blocage (72) et une seconde rainure de blocage (73) ouvertes sur une portion supérieure du support avant (11) et/ou une portion supérieure du support arrière (12), lorsque le support de tige de poussée (2) est dans la première position de travail, la languette de blocage est insérée dans la première rainure de blocage (72), lorsque le support de tige de poussée (2) est dans la deuxième position de travail, la languette de blocage est insérée dans la seconde rainure de blocage (73), le cinquième arbre (95) est écarté du premier arbre (91), et un organe élastique d'élément de blocage étant disposé entre l'élément de blocage (71) et le siège de tige de poussée (21) pour rendre la languette de blocage fermement insérée dans la première rainure de blocage (72) ou la seconde rainure de blocage (73).

12. Poussette selon la revendication 1, dans laquelle le mécanisme de blocage télescopique comprend une première rainure de positionnement (83) ouverte sur le siège de tige de poussée (21), une seconde rainure de positionnement (84) ouverte sur le siège de tige de poussée (21) et en dessous de la première rainure de positionnement (83), un premier bloc de positionnement (81) disposé en rotation ou en coulissement sur une portion inférieure de la tige de poussée (22) et un second bloc de positionnement (82) disposé en rotation ou en coulissement sur une portion supérieure de la tige de poussée (22), lorsque le châssis est déplié, le premier bloc de positionnement (81) est inséré dans la première rainure de positionnement (83), lorsque le châssis est plié, le second bloc de positionnement (82) est inséré dans la seconde rainure de positionnement (84), un mécanisme de commande étant prévu sur la tige de poussée (22) pour commander l'action du premier bloc de positionnement (81) et du second bloc de positionnement (82).

13. Poussette selon la revendication 12, dans laquelle la seconde rainure de positionnement (84) au niveau d'un côté inférieur de celle-ci a un premier plan incliné qui est capable de venir en contact contre le premier bloc de positionnement (81) de sorte que le premier bloc de positionnement (81) sorte vers le bas de la seconde rainure de positionnement (84), le premier bloc de positionnement (81) au niveau portion supérieure de celui-ci ayant un deuxième plan incliné qui est capable de venir en contact contre une portion supérieure de la portion d'ouverture de la seconde rainure de positionnement (84) de sorte que le premier bloc de positionnement (81) sorte vers le haut de la seconde rainure de positionnement (84), et le second bloc de positionnement (82) au niveau portion inférieure de celui-ci ayant un troisième plan incliné qui est capable de venir en contact contre une portion inférieure de la portion d'ouverture de la première rainure de positionnement (83) de sorte que le second bloc de positionnement (82) sorte vers le bas de la première rainure de positionnement (83).
